# EUROPÄISCHE PATENTSCHRIFT

(11) **EP 2 558 683 B1**
(45) Veröffentlichungstag und Bekanntmachung des Hinweises auf die Patenterteilung: **19.08.2015**
(21) Anmeldenummer: 11722705.8
(22) Anmeldetag: 08.04.2011
(51) Int. Cl.: F01B 3/00, F02B 75/26

(54) **HUBKOLBENMOTOR MIT VERBESSERTEM MASSENAUSGLEICH**
RECIPROCATING PISTON ENGINE WITH IMPROVED MASS EQUALIZATION
MOTEUR À PISTON ALTERNATIF PRÉSENTANT UN MEILLEUR ÉQUILIBRAGE DES MASSES

(30) Priorität: 02.07.2010 AT 11272010; 12.04.2010 AT 5852010
(43) Veröffentlichungstag der Anmeldung: 20.02.2013
(73) Patentinhaber: König, Harald, 5220 Fuschl am See (AT)
(72) Erfinder: König, Harald, 5220 Fuschl am See (AT)
(74) Vertreter: Patentanwälte Barger, Piso & Partner
(86) Internationale Anmeldenummer: PCT/AT2011/000170
(87) Internationale Veröffentlichungsnummer: WO 2011/127502

(56) Entgegenhaltungen:
- FR-A- 416 890
- US-A- 2 065 790
- US-A- 3 945 359
- US-A1- 2007 017 460

## Beschreibung

Die Erfindung betrifft einen Hubkolbenmotor mit verbessertem Massenausgleich entsprechend dem Oberbegriff des Anspruches 1. Ein derartiger Motor ist aus der FR 416 890 bekannt. Bei diesem Achtzylindermotor wirken jeweils zwei Kolben nach Art eines 180° V-Motors auf ein gemeinsames Element, das die Drehung der zentralen, in Richtung der Zylinderachsen verlaufenden Abtriebswelle bewirkt. Vier derartige Kolbenpaare sind in den Eckpunkten eines Quadrates um die Abtriebswelle angeordnet.

Ein anderer, ähnlicher, Motor ist aus der JP 2004204777 bekannt. Diese Druckschrift offenbart eine Vorrichtung, bei der jeder Kolben auf eine Wippe wirkt, die ihrerseits über ein Kegelradgetriebe und Freiläufe die reziprozierende Bewegung in eine durchgehende Drehbewegung einer normal zu den Zylinderachsen verlaufenden Abtriebswelle umsetzt. Der Massenausgleich ist, zusätzlich zu allen grundsätzlichen Problemen reziprozierender Massen, schlecht.

Aus der DE 26 26 979 ist ein Motor mit Drehhubkolben bekannt, der auch bei fixierter Abtriebsache weiterlaufen kann, dann aber in Drehung um die Abtriebsachse versetzt wird. Er weist zwei koaxial um die Abtriebsachse gegengleich angeordnete Ringzylinder mit Ringkolben auf, die über ein internes Getriebe mit einer Art Kardangelenk bzw. Differenzial mit der Abtriebsachse verbunden sind. Wenn auch die Kolben vollen Massenausgleich aufweisen, ist doch das komplexe Getriebe (im zentralen Hohlraum der Zylinder angeordnet!) nicht voll ausgeglichen, von den anderen praktischen Unzulänglichkeiten ganz zu schweigen.

Allgemein weisen Hubkolbenmotoren aufgrund Ihrer Ausgereiftheit und des allgemein zur Verfügung stehenden Know-hows und der technologischen Ausgefeiltheit der Werkstoffe und der tiefen Kenntnis der Verbrennungsvorgänge im Zylinder und der so erzielten hervorragenden Anpassung an das jeweilige Einsatzgebiet große Verbreitung auf.

Ein mit dem Prinzip des Hubkolbenmotors intrinsisch verbundenes Problem ist das Problem des Massenausgleichs, das einerseits durch die hin-her gehende Kolbenbewegung in Verbindung mit der ungleichmäßigen Kolbengeschwindigkeit, ausgehend vom oberen Totpunkt und ausgehend vom unteren Totpunkt, andererseits durch die von der seitlichen Komponente der Kurbelbewegung stammende Unwucht entsteht.

Reihen-Sechszylinder-Motoren im Viertaktbetrieb mit 120° Zündabstand bieten hier bis zur zweiten Ordnung, sowohl bei den freien Massenkräften, als auch bei den freien Massenmomenten, einen vollständigen Ausgleich, doch beginnt bei solchen Motoren schon die Torsionssteifigkeit beziehungsweise der Mangel an Torsionssteifigkeit der langen Kurbelwelle problematisch zu werden, und durch die Anordnung der Zylinder in Reihe kommt es zu sehr lang bauenden Motorblöcken.

Ausgleichskonstruktionen arbeiten mit verschiedenen exzentrischen Schäften, die parallel zur Kurbelwelle verlaufen und mit ihr drehfest verbunden sind und meist zum Ausgleich der Massenkräfte und Massenmomente höherer Ordnung mit doppelter oder vierfacher Drehzahl der Kurbelwelle rotieren. In Umkehr dieser komplexen und damit teuren Systeme begnügen sich verschiedentlich die Konstrukteure mit einer möglichst die Schwingungen nicht auf das Fundament bzw. den Fahrzeugrahmen übertragenden Aufhängung bzw. Lagerung des Motors.

Die Erfindung hat dem gegenüber das Ziel, einen Hubkolbenmotor zu schaffen, der kompakt aufgebaut ist und einen hochgradigen Ausgleich der Massenkräfte und Massenmomente besitzt.

Erfindungsgemäß werden diese Ziele bei einem Hubkolbenmotor mit den im kennzeichnenden Teil des Anspruches 1 angegebenen Merkmalen erreicht.

Es ist somit, mit anderen Worten, der erfindungsgemäße Hubkolbenmotor im Wesentlichen dadurch gekennzeichnet, dass jeweils zwei einander diagonal gegenüberliegende Zylinder, axial gesehen, gleichsinnig und, axial gesehen, gegensinnig zu den beiden anderen Zylindern angeordnet sind. Bevorzugt sind vier Zylinder im Quadrat angeordnet, wobei die diagonal zueinander liegenden Zylinder gegensinnig, aber in sonst gleicher Winkellage arbeiten und die beiden so gebildeten Zylinderpaare Kopf zu Fuß angeordnet sind, das heißt, dass zwischen den Kurbeltrieben des einen Paares die Zylinderköpfe mit den Ventilen des anderen Paares vorgesehen sind. Damit wird das jeweils generierte Drehmoment bestmöglich auf die Abtriebswelle übertragen und es besteht trotz der kompakten Bauweise genügend Platz für die Ventilsteuerung und die Treibstoffzufuhr.

Die Übertragung der Drehmomente der einzelnen Zylinder auf die Abtriebsachse mittels Kegelräder ist durch die hochgenaue und hoch standfest Fertigungsmöglichkeit für Kegelräder kein Problem mehr, die diesbezüglichen Probleme, die bei der Lebensdauer und der Ganggenauigkeit von Kegelrädern bis in die 80-er Jahre des 20. Jahrhunderts auftraten, sind vollständig überwunden, desgleichen die damals sehr hohen Herstellungskosten.

Die Erfindung ist im Folgenden anhand der Zeichnung näher erläutert. Dabei zeigt bzw. zeigen
die Fig. 1 einen rein schematischen Schnitt normal zur Abtriebsachse,
die Fig. 2 einen mehrfach um die Ecke geführten, rein schematischen Schnitt durch verschiedene Zylinderachsen,
die Fig. 3 und 4 eine Variante in gleichen Ansichten wie die Fig. 1 und 2 und
die Fig. eine Variante mit Zweitaktbetrieb.

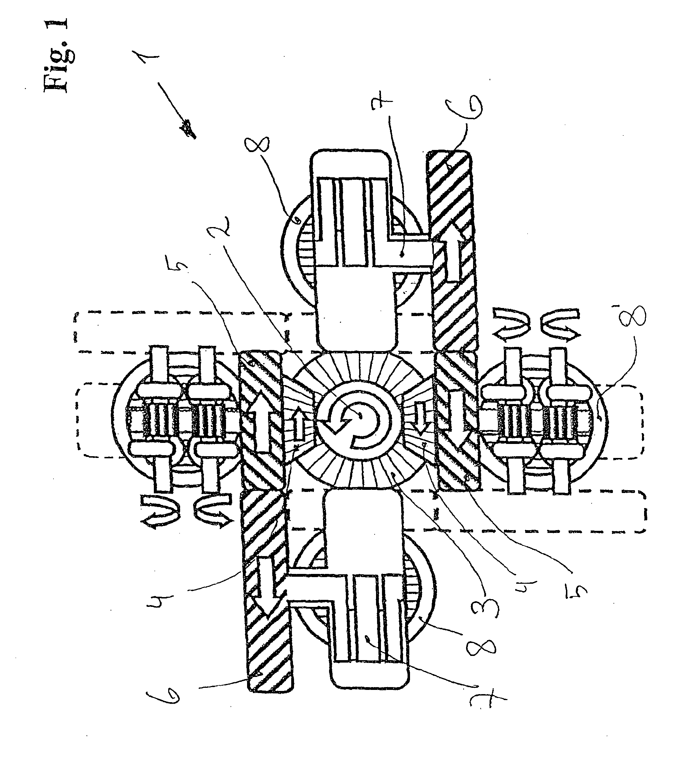

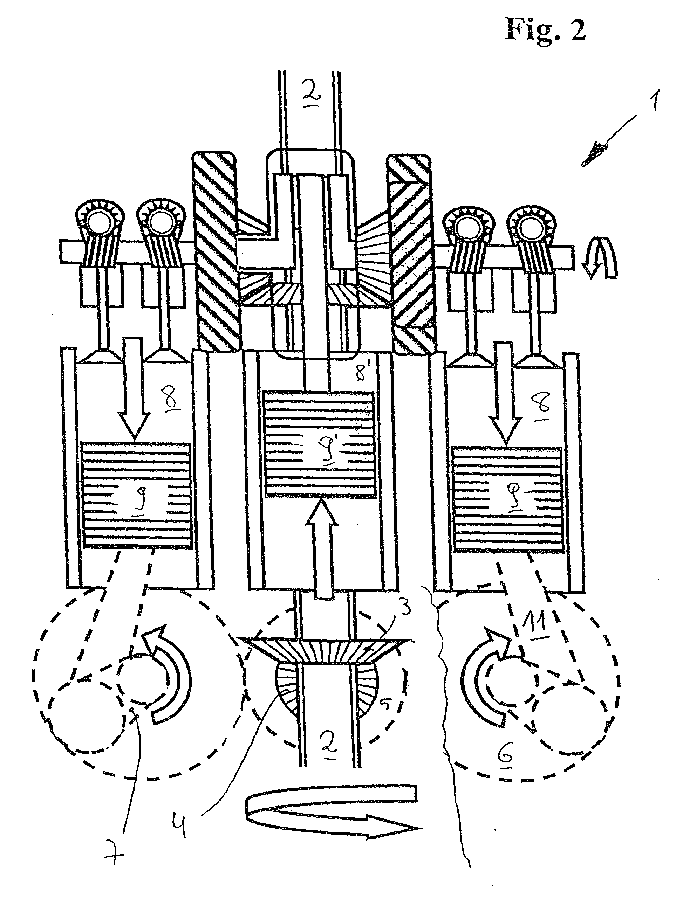

Die Fig. 1 zeigt in einem schematischen, über mehreren Stufen geführten Schnitt durch einen erfindungsgemäßen Hubkolbenmotor 1, eine Abtriebswelle 2 mit einem auf ihr befestigten Kegelrad 3, das mit zwei Antriebskegelrädern 4 kämmt. Drehfest und koaxial mit dem Antriebskegelrad 4 verbunden, ist jeweils ein Zwischenzahnrad 5, das mit einem Kurbelzahnrad 6 kämmt. Das Kurbelzahnrad 6 wiederum ist mit einer Kurbel(welle) 7 eines Pleuels 11 eines Kolbens 9 (Fig. 2) eines Zylinders 8 fest verbunden. Durch die Wahl der Übersetzung der Kegelräder ist es möglich, in weiten Grenzen zu passenden Übersetzungen zu kommen, wodurch der Motor in für ihn günstigen Drehzahlbereichen betrieben werden kann,

Aus Fig. 1 ist ersichtlich, dass die beiden Zylinder 8, deren Kurbelwelle 7 dargestellt ist, symmetrisch zur Abtriebswelle 2 und mit parallel zu ihr verlaufenden Zylinderachsen angeordnet sind. Die beiden Kurbelwellen verlaufen parallel zueinander, die Abtriebswelle 2 verläuft normal zu der durch die Kurbelachsen aufgespannten Ebene.

Um die Achse der Abtriebswelle 2 herum um 90° verdreht und auf den Kopf gestellt sind zwei weitere, zu den Zylindern 8 baugleiche Zylinder 8' vorgesehen, bei denen nur zum Zwecke der Unterscheidung die Bezugszeichen mit einem "'" versehen sind.

Durch diese Maßnahmen erreichen alle vier Kolben 9 gleichzeitig den oberen Totpunkt und gleichzeitig den unteren Totpunkt. Da aber zwei und zwei Zylinder gegensinnig zueinander angeordnet sind, quasi Kopf an Fuß, werden die Unterschiede der Kolbenbewegung über die Kurbeldrehung vollständig ausgeglichen; durch die Symmetrie jeweils zweier gleichsinnig angeordneter Zylinder werden die horizontalen (eigentlich normal zu den Zylinderachsen auftretenden) Kräfte vollständig ausgeglichen.

Wie aus der Anordnung der Kolben und Kurbeln und den die Drehrichtung angebenden Pfeilen hervorgeht, weist der Motor vollständigen Massenausgleich auf. Durch die kompakte Bauweise, bei der von den Kurbeln 7 der Kolben 9 bzw. der Zylinder 8 die den Zylindern 8' zugeordneten Ventile 10' gesteuert werden können, ist der Platzbedarf gering und die zentral durchgehende Abtriebswelle 2 ermöglicht die unterschiedlichsten Einbausituationen. Der Motor ist durch den praktisch direkten Kraft- bzw. Momentenfluss vom Kolben 9 über das Pleuel 11, über die kurze Kurbel 9 und die Verzahnung zur Abtriebswelle 2 praktisch frei von Verwindungen und somit Torsionsschwingungen, zu denen beispielsweise klassische Reihensechszylindermotoren wegen der Länge der Kurbelwelle neigen.

Bei dieser Variante der Erfindung ist es durch die Verwendung der Zahnräder 3, 4, 5 und 6 noch besser als bei der ersten Variante möglich, bereits im Motor selbst die jeweils gewünschte "Hauptdrehzahl" der Abtriebswelle 2 bei Normaldrehzahl des gesamten Motors anzupeilen, ohne dass es zusätzlicher Bauteile bedarf.

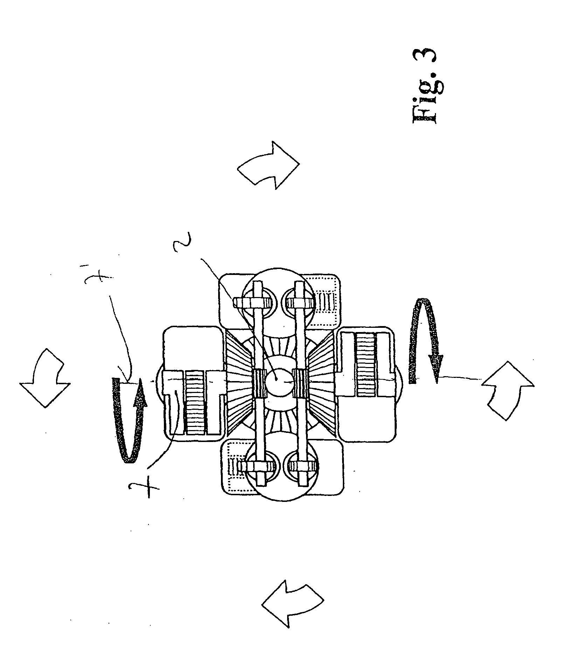

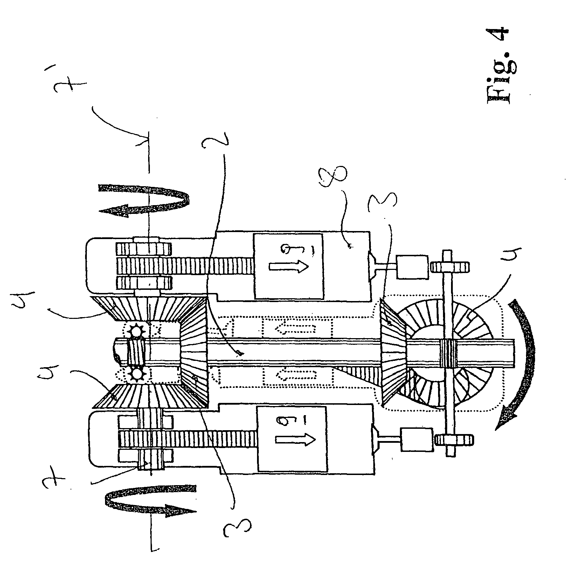

Eine Variante der Erfindung ist in den Figs. 3 und 4 dargestellt, wobei gleiche Teile mit gleichen Bezugszeichen wie in den Figs. 1 und 2 bezeichnet sind, auch der prinzipielle Aufbau des Kurbeltriebs bzw. der Kolbenmaschine ist der gleiche, nur die Orientierung der Kurbelachsen 7' der einzelnen Zylinder ist eine andere:
Wie insbesondere aus Fig. 3 ersichtlich, verläuft die Achse 7' der Kurbelwelle 7 auf die Achse der Abtriebswelle 2 zu und schneidet diese. Auf diese Weise wird es möglich, dass ein auf der Kurbelwelle 7 sitzendes Antriebskegelrad 4 mit einem auf der Abtriebswelle 2 sitzenden Kegelrad 3 kämmt und so das Motordrehmoment abgeführt wird, ohne dass eine Zwischenverzahnung notwendig ist.

Es kann durch diese Konstruktion auf die bei der 1. Ausführungsform notwendigen Stirnzahnräder 5, 6 verzichtet werden, es fällt damit die durch diese Zahnräder bestehende zusätzliche Übersetzungsmöglichkeit fort, die durch die Wahl der Kegelräder bestehende Übersetzungsmöglichkeit bleibt erhalten.

Aus den Figs. 3 und 4 ist auch eine Variante zum Antrieb der Ventile ersichtlich, nämlich über eine an der Antriebswelle 2 nach Art eines Gewindes angebrachten Verzahnung, die auch als Schneckenrad angesehen werden kann und damit kämmenden Stirnzahnrädern, die auf einer Welle mit entsprechenden Nocken sitzen. Da diese Variante allerdings nur als Appendix zu sehen ist, wurde davon Abstand genommen, Bezugszeichen zu vergeben.

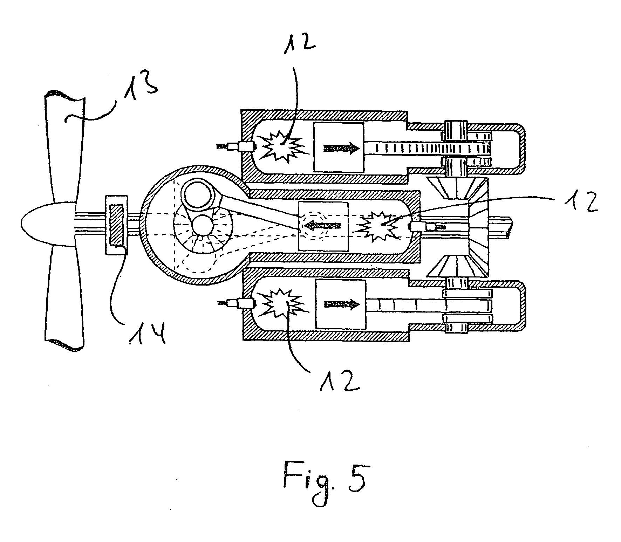

Die Fig. 5 zeigt eine Variante als Antrieb für einen Propeller 13 eines - nicht dargestellten - Flugzeuges, wobei, wie die "Zündblitze" 12 andeuten, ein Zweitaktbetrieb vorgesehen ist. Die Darstellung verläuft wiederum entlang einer mehrfach geknickten Fläche, um Querschnitte durch die gestaffelt liegenden Zylinder zu erlauben. Im Antriebsstrang ist zwischen Propeller 13 und dem Motor ein Dämpfungselement 14 vorgesehen, das im dargestellten Beispiel den Antrieb koaxial fortsetzt, was nicht sein muss. Es kann diese Dämpfung mit einem Getriebe mit passender Übersetzung kombiniert sein. Durch die geschnittene Abtriebswelle ist angedeutet, dass zumindest eine weitere gleichartige Motoreinheit auf der dem Propeller abgewandten Seite vorgesehen ist, die ebenfalls auf die Abtriebswelle und_den Propeller 13 wirkt.

Die erfindungsgemäße Vorrichtung bedarf keiner neuer oder exotischer Materialien, Steuerungen, Dichtungen, etc. wodurch sie in Kenntnis der Erfindung für den Motorenbauer leicht und problemlos zu dimensionieren und auszulegen ist. Die Verzahnung ist in Kenntnis der Erfindung und der Leistung und des Drehmomentes des Motors und des Drehzahlbereiches der Abtriebswelle ohne Probleme auszulegen und herzustellen, auf dem Gebiete des Getriebebaus sind alle dazu notwendigen Kenntnisse leicht zugänglich.

Die Darstellungen zeigen die Abtriebswelle 2 in intuitiv vertikal gesehener Richtung verlaufend, doch ist dies nur eine Konvention. Wie bei Hubkolbenmotoren üblich, kann die Orientierung der Zylinderachsen an die jeweilige Einbausituation angepasst werden, ohne dass das auf den Motor selbst einen Einfluss hätte. Es ist Wasserkühlung und Luftkühlung denkbar, 2-Takt-Betrieb oder 4-Takt-Betrieb; ob Benzin, Diesel oder andere Brennstoffe verwendet werden, steht im Ermessen des Konstrukteurs.

Bei Anwendung als Flugzeugmotor, was sich wegen der kompakten Bauweise und des hochgradigen Massenausgleiches anbietet, ist zur Schonung der Kegelradverzahnungen gegen stoßartige Drehmomentschwankungen, die vom Propeller induziert werden können, eine "weiche" Verbindung bzw. eine Dämpfungsvorrichtung angezeigt. Auch ist bei dieser Verwendung der Betrieb als Zweitaktmotor vorteilhaft, weil der Kompressionsdruck niedriger ist, somit die Wandstärken und damit die Masse herabgesetzt werden können; weil keine Ölwannen benötigt werden und der Betrieb lageunabhängig ist ("Kunstflugtauglich"); weil kein Lastwechsel an der Kegelradverzahnung stattfindet und schließlich weil die Führung der Gasströme auf engem Raum leichter möglich ist als beim Viertaktbetrieb.

## Patentansprüche

1. Hubkolbenmotor (1) mit vier Zylindern (8, 8') mit kreisförmigem Querschnitt mit zueinander parallelen Zylinderachsen und einer Abtriebswelle (2), wobei die Zylinderachsen, im Axialschnitt gesehen, in den Eckpunkten eines Rechteckes, bevorzugt eines Quadrates liegen, in dessen Zentrum die Achse der parallel zu den Zylinderachsen verlaufenden Abtriebswelle (2) liegt und wobei die Kraftbzw. Momentenübertragung über eine rotierende Kurbel (7, 7') und eine Verzahnung (3, 4, 5, 6) auf die Abtriebswelle (2) erfolgt, **dadurch gekennzeichnet, dass** jeweils zwei einander diagonal gegenüberliegende Zylinder (8; 8'), axial gesehen, gleichsinnig und, axial gesehen, gegensinnig zu den beiden anderen Zylindern (8'; 8) angeordnet sind, und dass die Kraft- bzw. Momentenübertragung von jedem Zylinder (8, 8') über eine eigene rotierende Kurbel (7, 7') erfolgt.

2. Hubkolbenmotor (1) nach Anspruch 1, **dadurch gekennzeichnet, dass** einander diagonal gegenüberliegende Kolben (9; 9') in gleicher Phase und mit gegensinnig rotierender Kurbel (7) angeordnet sind.

3. Hubkolbenmotor (1) nach Anspruch 2, **dadurch gekennzeichnet, dass** die Kolben (9; 9') aller Zylinder (8; 8') gleichzeitig ihren oberen und ihren unteren Totpunkt erreichen,

4. Hubkolbenmotor nach einem der voranstehenden Ansprüche, **dadurch gekennzeichnet, dass** die Verzahnung Kegelräder (3, 4) aufweist.

5. Hubkolbenmotor nach einem der voranstehenden Ansprüche, **dadurch gekennzeichnet, dass** die Achsen (7') der Kurbelwellen (7) die Achse der Abtriebswelle (2) schneiden, und dass die Kurbelwellen (7) Kegelräder (4) tragen, die mit Kegelrädern (3) auf der Abtriebsachse kämmen.

6. Hubkolbenmotor nach einem der Ansprüche 1 bis 4, **dadurch gekennzeichnet, dass** die Achsen (7') der Kurbelwellen (7) paarweise parallel zueinander und windschief zur Achse der Abtriebswelle (2) verlaufen, und dass die Kurbelwellen (7) Kurbelzahnräder (6) tragen, die mit Zwischenzahnädern (5) kämmen, die koaxial Kegelräder (4) tragen, die mit Kegelrädern (3) auf der Abtriebsachse kämmen.

## Claims

1. A reciprocating piston engine (1), with four cylinders (8, 8'), with circular cross section and cylinder axes parallel to each other; and an output shaft (2); wherein the cylinder axes, seen in axial section, are disposed so as to define the corners of a rectangle, preferably a square; the axis of the output shaft (2) disposed in the centre of the rectangle and being parallel to the cylinder axes; the transmission of force and torque to the output shaft (2) carried out via a rotating crankshaft (7, 7') and a toothing (3, 4, 5, 6), **characterised in that** each two diagonally opposed cylinders (8, 8') have, axially seen, matching orientation and, axially seen, opposed orientation to the two other cylinders (8, 8'); and that the transmission of force and torque from each of the cylinders (8, 8') is carried out via a separate rotating crankshaft (7, 7').

2. The reciprocating piston engine of claim 1, **characterised in that** diagonally opposing pistons (9, 9') are configured to have the same phase with their crankshafts (7) configured to rotate in the opposite directions.

3. The reciprocating piston engine of claim 2 **characterised in that** the pistons (9, 9') of all cylinders (8, 8') are configured to reach their top dead centre position and their bottom dead centre position simultaneously.

4. The reciprocating piston engine according to any of the preceding claims **characterised in that** each toothing comprises bevel gears (3, 4).

5. The reciprocating piston engine according to any of the preceding claims **characterised in that** each axis (7') of the crankshafts (7) intersects the axis of the output shaft (2); and **in that** the crankshafts (7) further comprise bevel gears (4) configured to mesh with bevel gears (3) on the output shaft (2).

6. The reciprocating piston engine according to any of claims 1 to 4, **characterised in that** the axes (7') of the crankshafts (7) are oriented parallel to one another in pairs and skewed with respect to the axis of the output shaft (2); and **in that** the crankshafts (7) comprise crankshaft gears (6) that mesh with intermediate coaxial gears (5), bearing coaxial bevel gears (4) which mesh with bevel gears (3) on the output shaft.

## Revendications

1. Moteur à pistons alternatifs (1) comportant quatre cylindres (8, 8') de section circulaire, dont les axes sont parallèles entre eux, et un arbre de sortie (2), les axes des cylindres étant situés, vu en coupe axiale, aux sommets d'un rectangle, de préférence d'un carré au centre duquel se situe l'axe de l'arbre de sortie (2), s'étendant parallèlement aux axes des cylindres, et la transmission de force et de couple à l'arbre de sortie (2) s'effectuant par l'intermédiaire d'un vilebrequin (7, 7') en rotation et d'une denture (3, 4, 5, 6), **caractérisé en ce que** chaque fois deux cylindres (8 ; 8') diagonalement opposés sont disposés, vu axialement, dans le même sens et, vu axialement, en sens inverse par rapport aux deux autres cylindres (8' ; 8), et que la transmission de force et de couple de chaque cylindre (8, 8') s'effectue par l'intermédiaire de son propre vilebrequin (7, 7') en rotation.

2. Moteur à pistons alternatifs (1) selon la revendication 1, **caractérisé en ce que** des pistons (9 ; 9') diagonalement opposés sont disposés en phase et avec un vilebrequin (7) tournant en sens inverse.

3. Moteur à pistons alternatifs (1) selon la revendication 2, **caractérisé en ce que** les pistons (9 ; 9') de tous les cylindres (8 ; 8') atteignent en même temps leur point mort haut et leur point mort bas.

4. Moteur à pistons alternatifs selon l'une des revendications précédentes, **caractérisé en ce que** la denture présente des roues coniques (3,4).

5. Moteur à pistons alternatifs selon l'une des revendications précédentes, **caractérisé en ce que** les axes (7') des vilebrequins (7) coupent l'axe de l'arbre de sortie (2), et que les vilebrequins (7) portent des roues coniques (4) qui engrènent avec des roues coniques (3) sur l'axe de l'arbre de sortie.

6. Moteur à pistons alternatifs selon l'une des revendications 1 à 4, **caractérisé en ce que** les axes (7') des vilebrequins (7) s'étendent par paires parallèlement entre eux et obliquement par rapport à l'axe de l'arbre de sortie (2), et que les vilebrequins (7) portent des pignons de vilebrequin (6) qui engrènent avec des pignons intermédiaires (5) qui portent coaxialement des roues coniques (4) qui engrènent avec des roues coniques (3) sur l'axe de l'arbre de sortie.
